(19) Europäisches Patentamt
European Patent Office
Office européen des brevets

(11) Veröffentlichungsnummer: **0 058 388**
**A1**

(12) # EUROPÄISCHE PATENTANMELDUNG

(21) Anmeldenummer: 82100991.7

(22) Anmeldetag: 11.02.82

(51) Int. Cl.³: C 04 B 13/14
C 04 B 11/14

(30) Priorität: 14.02.81 DE 3105407

(43) Veröffentlichungstag der Anmeldung:
25.08.82 Patentblatt 82/34

(84) Benannte Vertragsstaaten:
AT BE DE FR GB IT SE

(71) Anmelder: HOECHST AKTIENGESELLSCHAFT
Postfach 80 03 20
D-6230 Frankfurt/Main 80(DE)

(72) Erfinder: May, Adolf, Dr.
Dahlienweg 5
D-6238 Hofheim am Taunus(DE)

(72) Erfinder: Voetz, Franz Josef
Weilstrasse 26
D-6277 Camberg/Taunus(DE)

(72) Erfinder: Gerl, August
Kallestrasse 5
D-6000 Frankfurt am Main(DE)

(54) **Wasserabweisender Gipsmörtel.**

(57) Wasserabweisender Gipsmörtel, gekennzeichnet durch einen Gehalt eines Hydrophobiermittels bestehend aus

a) einem Fettamin der Formel

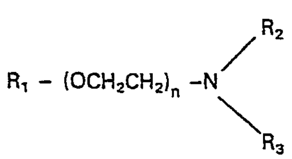

wobei $R_1$ $C_8$–$C_{22}$–Alkyl, $C_8$–$C_{22}$–Alkenyl oder $C_8$–$C_{22}$–Alkylphenyl, $R_2$ und $R_3$ Wasserstoff, $C_1$–$C_4$–Alkyl, $C_2$–$C_4$–Alkenyl, $C_1$–$C_4$–Alkoxy–$C_1$–$C_4$–alkyl, $C_1$–$C_4$–Hydroxialkyl, Phenyl, Benzyl oder eine Gruppe der Formel – $(CH_2CH_2O)_nH$ und n eine Zahl von 0 bis 4 bedeutet,

b) einer niedermolekularen Säure und

c) einem Alkalisilikonat.

EP 0 058 388 A1

Wassender Gipsmörtel

Beiteitungsgewerbe besteht ein verstärktes Interesse an weisendem Gipsmörtel zur Herstellung entspr Gipsplatten und Gipskartonplatten. Hierzu wereit Silikone verwendet, die jedoch teuer sind. Außrd ihre Wirkung durch den Gehalt der Luft an Kohd beeinträchtigt. Als hydrophobierende Zusatzstc Beton sind bereits Salze von Fettsäuren bekannt, sie jedoch in Gips nur eine unzureichende Wirkung. Auereits die hydrophobierende Wirkung von Alkylsih bekannt, doch reicht diese Wirkung beim Gi aus.

Es un gefunden, daß Mischungen aus Fettaminen, Sä Alkylsilikonaten eine hydrophobierende Wirkung zee wesentlich stärker ist als die Wirkung der Eionenten und die auch die Wirkung von Polysiin der Langzeitstabilität übertrifft.

Ge der Erfindung ist somit ein wasserabweisender Gi der gekennzeichnet ist durch einen Gehalt eines Hyermittels bestehend aus

a Fettamin der Formel

$$_1-(OCH_2CH_2)_n-N\begin{matrix} R_2 \\ R_3 \end{matrix}$$

$R_1$ $C_8$-$C_{22}$-, vorzugsweise $C_{14}$-$C_{22}$-Alkyl, $C_8$-$C_{22}$-, sweise $C_{14}$-$C_{22}$-Alkenyl oder $C_8$-$C_{22}$-Alkylphenyl, $R_3$ Wasserstoff, $C_1$-$C_4$-Alkyl, $C_2$-$C_4$-Alkenyl, Alkoxy-$C_1$-$C_4$-alkyl, $C_1$-$C_4$-Hydroxialkyl, Phenyl, oder eine Gruppe der Formel $-(CH_2CH_2O)_nH$ und n ahl von 0 bis 4 bedeutet,

niedermolekularen Säure und

c) einem Alkalisilikonat der Formel

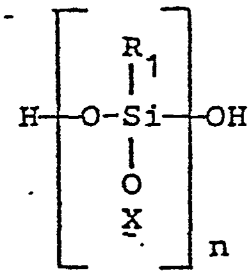

wobei $R_1$ $C_1$-$C_7$-Alkyl, vorzugsweise Methyl, $C_1$-$C_7$-Alkenyl, Phenyl oder Benzyl, X ein Alkalimetallion und n eine Zahl von 1 bis 10 bedeutet.

Als Fettamine kommen vor allem die gesättigten und ungesättigten Fettsäuren sowie deren Mischungen in Frage, wie sie aus natürlichen Fetten erhalten werden, wie beispielsweise Talgfettamin, Cocosfettamin, Stearylamin, Oleylamin oder Palmitylamin. Bei den niedermolekularen Säuren handelt es sich im wesentlichen um $C_1$-$C_4$-Carbonsäuren wie Ameisensäure oder Essigsäure, Dicarbonsäuren wie Oxalsäure oder Malonsäure, Hydroxycarbonsäuren wie Milchsäure und einwertige anorganische Säuren wie Salzsäure oder Salpetersäure aber auch Amidosulfonsäure. Das molare Mischungsverhältnis von Amin zu Säure kann in weiten Grenzen schwanken und beträgt von 1:3 bis zu 100 : 1 vorzugsweise 1:2 bis 64:1.
Die Herstellung der Fettamine erfolgt, ausgehend von den entsprechenden Fettsäuren und Fettalkoholen, nach den bekannten Verfahren der Cyanolyse oder Aminolyse, durch Anlagerung von Ammoniak und anschließende Hydrierung. Die Silikonate werden durch Umsetzung von kurzkettigem Alkylen mit Chlorsilanen und Alkalihydroxiden hergestellt. Durch innere Kondensation liegen Silikonate nur teilweise in der Monomerform vor. Üblicherweise werden sie als wäßrige Lösungen in den Handel gebracht.

Das Gewichtsverhältnis dieser Silikonate zu dem Gemisch aus Fettamin und Säure liegt zwischen 5:1 und 1:5.

Die Konzentration des gesamten Hydrophobiermittels, gerechnet als 100 % Festsubstanz, beträgt ca. 0,2 bis 5 Gew.-% bezogen auf den Gips.

Für die Herstellung des wasserabweisenden Gipsmörtels werden zunächst die Fettamine mit der Säure in dem gewünschten Verhältnis innerhalb der oben angegebenen Grenzen gemischt und teilneutralisiert. Dabei werden wasserhaltige Pasten mit einem Gehalt an Feststoff von ca. 40-60 Gew.-% oder Stammdispersionen mit einem Feststoffgehalt von ca. 5 bis 20 Gew.-% hergestellt. Diese Stammdispersionen oder Pasten werden dem Wasser für die Zubereitung des Gipsmörtels zugegeben. Hiernach wird der Gips eingestreut zusammen mit dem Alkalisilikonat. Das Gewichtsverhältnis von Gips zu Wasser beträgt, wie bei der Verarbeitung von Gipsmörtel üblich, 2:3 bis 5:3. Die Reihenfolge der Zugabe kann auch so erfolgen, daß zuerst das Silikonat dem Wasser zugesetzt wird, dann der Gips und zum Schluß das teilneutralisierte Fettamin. In entsprechend eingerichteten Anlagen können auch alle vier Komponenten gleichzeitig vermischt werden.

Der so hergestellte Gipsmörtel zeichnet sich aus durch seine verbesserte wasserabweisende Eigenschaft im Vergleich zu einem Gipsmörtel, der mit bisher zu diesem Zweck verwendeten Substanzen hydrophobiert ist. Der erfindungsgemäße Gipsmörtel läßt sich nach an sich bekannten Methoden weiterverarbeiten, beispielsweise zu Gipsplatten oder Gipskartonplatten.

Beispiele

In einem Rührbehälter werden 612 g Wasser vorgelegt und 34 g 10 %ige wässrige Methylsilikonatlösung eingerührt. Dann werden 680 g Gips zugegeben und leicht "sumpfen" gelassen. Abschließend gibt man noch 34 g 10 %ige wässrige Aminsalzdispersion zu und verrührt. Dieser Gipsbrei wird in eine Prismenform gegossen. Nach der Aushärtung werden 3 Prüfkörper der Größe 4 x 4 x 16 cm entnommen und bei 40°C bis zur Gewichtskonstanz getrocknet. Diese Prüfkörper werden dann nach folgenden Methoden auf ihre Wasseraufnahme geprüft.

1. Nadelfilzprüfung

Das Nadelfilzprüfgerät ist ein Becken, in dem bei konstanten Temperaturen und Wasserstand ein Nadelfilz mit einem Flor von ca. 1 cm dauernd naß gehalten wird. Die Prüfkörper werden mit der Stirnseite auf den Nadelfilz aufgesetzt und nach 168 Stunden wird die Wasseraufnahme dieses Prüfkörpers gemessen.

2. Volltauchung

Ein 2l Becherglas wird mit 1,5 l Wasser gefüllt, in das der Prüfkörper voll eingetaucht wird. Nach 2 Stunden wird die Wasseraufnahme des Prüfkörpers gemessen.

Die folgenden Tabellen geben einen Überblick über die Art und Menge der jeweils eingesetzten Komponenten a), b) und c) sowie die Wasseraufnahme gemäß den oben beschriebenen Methoden bei Gipskörpern, die mit dem Gemisch dieser Komponenten a), b) und c) hydrophobiert wurden.

1. Mischung aus Fettaminsalz und Natriummethylsilikonat im Gewichtsverhältnis 1 : 1

| | Molverhältnis Amin : Säure | Gew.-% Wasseraufnahme Volltauchung | Nadelfilz |
|---|---|---|---|
| 1 % Dodecylamin/Essigsäure | 1 : 1 | 42,8 | 32,6 |
| 2 % Dodecylamin/Essigsäure | 1 : 1 | 38,6 | 30,2 |
| 3 % Dodecylamin/Essigsäure | 1 : 1 | 25,4 | 21,3 |
| 1 % Stearylamin/Essigsäure | 16 : 1 | 11,7 | 0,2 |
| 2 % Stearylamin/Essigsäure | 16 : 1 | 0,6 | 0,1 |
| 3 % Stearylamin/Essigsäure | 16 : 1 | 0,2 | 0,05 |
| 1 % Stearylamin/Essigsäure | 32 : 1 | 9,8 | 2,1 |
| 2 % Stearylamin/Essigsäure | 32 : 1 | 0,8 | 0,1 |
| 3 % Stearylamin/Essigsäure | 32 : 1 | 0,4 | 0,1 |

2. Mischung aus Fettaminsalz und Methylsilikonat im Gewichtsverhältnis 3 : 1

| | Molverhältnis Amin : Säure | Gew.-% Wasseraufnahme Volltauchung | Nadelfilz |
|---|---|---|---|
| 1 % Hexadecylamin/Ameisensäure | 64 : 1 | 18,5 | 7,3 |
| 2 % Hexadecylamin/Ameisensäure | 64 : 1 | 3,2 | 0,9 |
| 3 % Hexadecylamin/Ameisensäure | 64 : 1 | 0,7 | 0,1 |
| 1 % Stearylamin/Essigsäure | 16 : 1 | 8,2 | 1,5 |
| 2 % Stearylamin/Essigsäure | 16 : 1 | 0,8 | 0,05 |
| 3 % Stearylamin/Essigsäure | 16 : 1 | 0,2 | 0,05 |
| 1 % Stearyldimethylamin/Ameisensäure | 16 : 1 | 19,4 | 10,1 |
| 2 % Stearyldimethylamin/Ameisensäure | 16 : 1 | 5,3 | 0,9 |
| 1 % Nonylphenoxyethylamin/Amidosulfonsäure | 32 : 1 | 12,6 | 5,7 |
| 2 % Nonylphenoxyethylamin/Amidosulfonsäure | 32 : 1 | 3,8 | 0,8 |
| 3 % Nonylphenoxyethylamin/Amidosulfonsäure | 32 : 1 | 1,0 | 0,08 |

Zum Vergleich wurde die Wasseraufnahme bei Gipskörpern gemessen, die entweder nur mit einem Fettamin-Salz oder nur mit Natriummethylsilikonat unter den oben angegebenen Bedingungen hydrophobiert wurden.

| | Molverhältnis | Gew.-% Wasseraufnahme | |
|---|---|---|---|
| | Amin : Säure | Volltauchung | Nadelfilz |
| 2 % Dodecylamin/Essigsäure | 16 : 1 | 33 | 23 |
| 2 % Tetradecylamin/Essigsäure | 16 : 1 | 8,3 | 15,5 |
| 2 % Hexadecylamin/Essigsäure | 16 : 1 | 2,9 | 3,3 |
| 2 % Stearylamin/Essigsäure | 16 : 1 | 10,5 | 4,4 |
| 2 % Stearylamin/Salzsäure | 32 : 1 | 24,9 | 7,4 |
| 2 % Stearylamin/Ameisensäure | 16 : 1 | 14,2 | 10,1 |
| 1 % Stearylamin/Essigsäure | 16 : 1 | 38,0 | 27,0 |
| 3 % Stearylamin/Essigsäure | 16 : 1 | 40,1 | 26,2 |
| 1 % Natriummethylsilikonat | | 43,0 | 26,4 |
| 2 % Natriummethylsilikonat | | 32,2 | 9,6 |
| 3 % Natriummethylsilikonat | | 27,8 | 6,1 |
| ohne Hydrophobierung | | 60 | 68 |

Die in der ersten Spalte der obigen Tabellen aufgeführte Prozentzahl gibt an, wieviel Gew.-% des Hydrophobiermittels, bezogen auf den Gips, eingesetzt wurde.

PATENTANSPRÜCHE:

1. Wasserabweisender Gipsmörtel, gekennzeichnet durch einen Gehalt eines Hydrophobiermittels bestehend aus

a) einem Fettamin der Formel

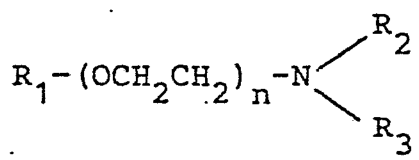

wobei $R_1$ $C_8$-$C_{22}$-, vorzugsweise $C_{14}$-$C_{22}$-Alkyl, $C_8$-$C_{22}$-, vorzugsweise $C_{14}$-$C_{22}$-Alkenyl oder $C_8$-$C_{12}$-Alkylphenyl, $R_2$ und $R_3$ Wasserstoff, $C_1$-$C_4$-Alkyl, $C_2$-$C_4$-Alkenyl, $C_1$-$C_4$-Alkoxy-$C_1$-$C_4$-alkyl, $C_1$-$C_4$-Hydroxialkyl, Phenyl, Benzyl oder eine Gruppe der Formel $-(CH_2CH_2)_nH$ und n eine Zahl von 0 bis 4 bedeutet,

b) einer niedermolekularen Säure und

c) einem Alkalisilikonat der Formel

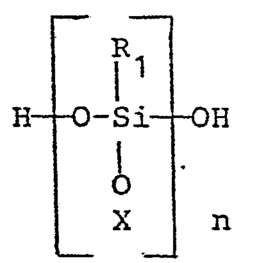

wobei $R_1$ $C_1$-$C_7$-Alkyl, $C_1$-$C_7$-Alkenyl, Phenyl oder Benzyl, X ein Alkalimetallion und n eine Zahl von 1 bis 10 bedeutet.

2. Wasserabweisender Gipsmörtel nach Anspruch 1, gekennzeichnet durch einen Gehalt von 0,2 bis 5 Gew.-% des Hydrophobiermittels.

3. Wasserabweisender Gipsmörtel nach Anspruch 1, dadurch gekennzeichnet, daß in dem Hydrophobiermittel das Gewichtsverhältnis von Fettamin zu Säure 1:3 bis 100:1 und das Gewichtsverhältnis dieses teilneutralisierten Fettamins zum Alkalisilikonat 5:1 bis 1:5 beträgt.

0058388

Nummer der Anmeldung

Europäisches Patentamt

## EUROPÄISCHER RECHERCHENBERICHT

EP 82 10 0991.7

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| Y | DE - B2 - 2 114 081 (W.R. GRACE & CO.)<br>* Anspruch 1, Spalte 2, Zeilen 31 bis 51; Spalte 3, Zeile 5 bis Spalte 4, Zeile 8 *<br>-- | 1 | C 04 B 13/14<br>C 04 B 11/14 |
| Y | ZEMENT-KALK-GIPS,Nr. 8, 1975 Wiesbaden<br>T. CHVATAL "Systematische Versuche zur Hydrophobierung des Gipses"<br>Seiten 337 bis 341<br>* Seite 338, rechte Spalte, Zeilen 14 bis 23 *<br>-- | 1 | RECHERCHIERTE SACHGEBIETE (Int. Cl.³) |
| A | DE - B - 1 239 605 (TEUTONIA MISBURGER PORTLAND-CEMENTWERK)<br>* Ansprüche 1, 4, 5 *<br>-- | 1 | C 04 B 11/00<br>C 04 B 13/00 |
| A | DE - A1 - 2 612 664 (HOECHST AG)<br>* Anspruch 1; Beispiel 3 *<br>-- | 1 | |
| P,A | EP - A1 - 0 032 664 (HOECHST AG)<br>* Anspruch *<br>---- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 30-03-1982 | BERTRAM |